## Europäisches Patentamt

## European Patent Office

## Office européen des brevets

(11) Numéro de publication: **0 022 714**
**B1**

(12) # FASCICULE DE BREVET EUROPEEN

(45) Date de publication du fascicule du brevet:
**14.03.84**

(51) Int. Cl.³: **G 21 C 15/18, G 21 C 1/02**

(21) Numéro de dépôt: **80401036.1**

(22) Date de dépôt: **09.07.80**

(54) Réacteur nucléaire à neutrons rapides refroidi par un métal liquide et muni d'un système d'évacuation de la puissance résiduelle.

(30) Priorité: **17.07.79 FR 7918452**

(43) Date de publication de la demande:
**21.01.81 Bulletin 81/3**

(45) Mention de la délivrance du brevet:
**14.03.84 Bulletin 84/11**

(84) Etats contractants désignés:
**BE DE GB IT NL**

(56) Documents cités:
**FR - A - 2 179 839**
**FR - A - 2 351 471**
**FR - A - 2 397 044**

**NUCLEAR ENGINEERING INT., vol. 23 no. 272, juin 1978 HAYWARDS HEATH (GB) "Construction of the world's first full-scale fast breeder reactor" pages 43-60**

(73) Titulaire: **COMMISSARIAT A L'ENERGIE ATOMIQUE Etablissement de Caractère Scientifique Technique et Industriel, B.P. 510, F-75752 Paris Cedex 15 (FR)**

(72) Inventeur: **Kayser, Gaston, Les Crones Couteron, F-13100 Aix en Provence (FR)**

(74) Mandataire: **Mongrédien, André et al, c/o BREVATOME 25, rue de Ponthieu, F-75008 Paris (FR)**

### Réacteur nucléaire à neutrons rapides refroidi par un métal liquide et muni d'un système d'évacuation de la puissance résiduelle

La présente invention concerne un réacteur nucléaire à neutrons rapides refroidi par un métal liquide et muni d'un système d'évacuation de la puissance résiduelle.

Plus précisément, l'invention se rapporte à un nouveau système d'évacuation de la puissance résiduelle pour un réacteur nucléaire à neutrons rapides refroidi par un métal liquide (en général du sodium liquide), ce réacteur étant du type intégré. Un tel réacteur est décrit notamment dans le document FR-A-2 397 044.

On sait que dans les réacteurs nucléaires refroidis par un métal liquide, en fonctionnement normal, la puissance dégagée par la réaction de fission dans le coeur du réacteur est absorbée par la circulation d'un métal liquide dit primaire: soit le circuit primaire est localisé dans la cuve même du réacteur et il s'agit d'un réacteur intégré, soit ce circuit primaire sort de la cuve et il s'agit d'un réacteur à boucles. Dans la très grande majorité des cas (et dans tous les cas où le réacteur est intégré), ce circuit primaire de métal liquide est associé à un circuit secondaire également de métal liquide. Ce deuxième circuit échange ses calories avec un circuit eau-vapeur qui actionne les turbines de l'installation productrice d'énergie électrique.

En plus de cet ensemble principal d'évacuation des calories pour la fourniture d'énergie électrique, les réacteurs de ces types comportent un système de refroidissement particulier dit système d'avacuation de la puissance résiduelle.

Si l'on prend le cas du réacteur français Super-Phénix (réacteur rapide intégré refroidi par du sodium liquide), l'évacuation de la puissance résiduelle s'effectue ainsi:

— dans les cas d'arrêts normaux par les circuits de démarrage-arrêt de l'installation productrice d'électricité,
— dans les cas d'arrêts de durée prolongée ou en cas de panne de courant électrique par des échangeurs sodium-air en parallèle sur les circuits secondaires de refroidissement en sodium liquide.

En cas de disparition de ces moyens normaux d'évacuation de la puissance résiduelle, seuls subsistent alors les moyens de refroidissement de secours qui sont les suivants:

— des boucles de refroidissement d'ultime secours qui comportent des échangeurs de forme générale cylindrique allongée dits échangeurs »bouteille« plongeant directement dans le sodium liquide de la cuve primaire et reliés euxmêmes à des échangeurs sodium-air; et
— des boucles de refroidissement d'ultime secours qui sont constituées par des circuits d'eau tapissant le puits du massif bétonné dans lequel est placée la cuve principale et qui reçoivent la chaleur de la cuve par rayonnement.

Il faut ajouter qu'en fonctionnement normal le refroidissement de la paroi de la cuve principale se fait par un débit dérivé de sodium liquide venant des pieds des assemblages constituant le coeur du réacteur, ce débit circulant ensuite dans l'espace annulaire compris entre la cuve principale du réacteur et un baffle thermique doublant la cuve principale.

La présente invention a pour objet un système d'évacuation de la puissance résiduelle d'un réacteur nucléaire intégré du type refroidi par un métal liquide qui, d'une part réalise les fonctions habituellement remplies par un tel système, mais qui permet en outre d'obtenir les avantages suivants:

a) le système selon l'invention permet d'améliorer le refroidissement de la cuve principale par rapport aux systèmes de refroidissement déjà connus; en particulier, si l'on envisage le cas où les barres de commande ne chuteraient pas, il minimise l'extraction de celles-ci hors du coeur, extraction due à l'échauffement différential de la cuve principale par rapport aux tiges des barres de commande,
b) le système selon l'invention permet une meilleure récupération du combustible fondu en cas d'accident entraînant la fusion au moins partielle du matériau combustible des assemblages.

On sait que dans le réacteur Super Phénix, les assemblages sont enfichés par leurs pieds dans un ensemble appelé sommier assurant à la fois le positionnement et l'alimentation du coeur en réfrigérant. Entre ce sommier et le fond de la cuve principale, on trouve une structure de récupération du combustible fondu en cas d'accident. Compte tenu de la température de fusion du combustible (de l'ordre de 2800° C dans le cas de l'oxyde d'uranium), et de la puissance résiduelle importante qu'il dégage, on comprend qu'il est très important de refroidir le métal fondu dans cette structure de récupération pour éviter d'autres incidents. Or, avec des systèmes de refroidissement d'ultime secours consistant en des échangeurs-bouteille disposés sensiblement au-dessus du niveau du coeur, ceux-ci ne peuvent assurer qu'un refroidissement médiocre du matériau combustible fondu. En effet, la distance entre ces échangeurs et la zone de récupération est relativement importante; de plus, des structures étanches séparent le volume du collecteur »froid« où est situé le récupérateur du volume du collecteur »chaud« dans lequel plongent les échangeurs bouteille; dans ces conditions, le refroidissement qui n'intervien

que par convection naturelle dans le sodium liquide et par conduction à travers des parois métalliques risque d'être insuffisant. Au contraire, avec le système objet de l'invention, on obtient un bien meilleur refroidissement de la zone de récupération.

La présente invention a précisément pour objet un réacteur nucléaire à neutrons rapides intégré refroidi par un métal liquide comportant un système d'évacuation de puissance résiduelle qui comporte tous les avantages indiqués ci-dessus.

A cet effet, il est proposé un réacteur nucléaire à neutrons rapides intégré refroidi par un métal liquide, du type comportant une cuve principale fermée à sa partie supérieure par une dalle, une cuve interne contenant le coeur, celui-ci reposant sur un sommier de positionnement et d'alimentation du coeur en métal liquide, reposant luimême sur une structure de supportage s'appuyant sur le fond de la cuve principale dudit réacteur, un baffle interne doublant la paroi latérale et une partie du fond de ladite cuve principale et définissant avec celle-ci un espace intermédiaire rempli par ledit métal liquide, conformément au document FR-A-2 397 044. Selon l'invention, ce réacteur est caractérisé en ce que le baffle interne double tout le fond de la cuve principale, le réacteur comprenant de plus des tubes pour amener un métal liquide dans ledit espace intermédiaire au-dessus du fond de la cuve principale et des tubes pour ramener ledit métal liquide vers un échangeur auxiliaire afin d'évacuer les calories provenant dudit espace intermédiaire.

Selon un premier mode de réalisation, les tubes servant à amener le métal liquide dans l'espace intermédiaire sont raccordés au-dessus du fond de la cuve principale aux tubes servant à ramener le métal liquide vers l'échangeur auxiliaire, ce dernier étant disposé à l'extérieur du réacteur à un niveau supérieur à celui de la dalle et muni de moyens pour régler l'efficacité de l'échange thermique, ledit baffle comportant des orifices mettant en communication ledit espace intermédiaire avec le métal liquide contenu dans la cuve principale.

Selon un deuxième mode de réalisation, le baffle interne isole le métal liquide contenu dans l'espace intermédiaire du métal liquide de refroidissement du coeur du réacteur, les tubes pour ramener le métal liquide contenu dans l'espace intermédiaire vers l'échangeur auxiliaire plongeant dans l'espace intermédiaire et débouchant au voisinage de sa partie supérieure, les tubes pour amener le métal liquide dans l'espace intermédiaire plongeant dans ce dernier et débouchant ou dessus du fond de la cuve principale, l'échangeur auxiliaire étant raccordé auxdits tubes et disposé à l'extérieur du réacteur à un niveau supérieur à celui de ladite dalle, ledit échangeur étant muni de moyens pour régler l'efficacité de l'échange thermique.

Selon un troisième mode de réalisation, l'échangeur auxiliaire est suspendu à la dalle et plonge dans ledit espace intermédiaire, ledit échangeur auxiliaire comportant une enveloppe munie de fenêtres d'entrée disposées à la partie supérieure dudit espace intermédiaire, et une pompe dont la tubulure de refoulement s'emboîte dans une extrémité en forme d'entonnoir de chacun des tubes amenant le métal liquide dans l'espace intermédiaire, l'extrémité ouverte de ces tubes débouchant dans la région inférieure dudit espace intermédiaire.

De toute façon, l'invention sera mieux comprise à la lecture de la description qui suit de plusieurs modes de réalisation de l'invention donnés à titre d'exemples non limitatifs. La description se réfère aux figures annexées sur lesquelles on a représenté:

— sur la figure 1, une vue simplifiée en coupe verticale d'un réacteur nucléaire intégré comportant un premier mode de réalisation du système d'évacuation de puissance résiduelle,

— sur la figure 2, une vue en coupe verticale similaire à celle de la figure 1, mais montrant un deuxième mode de réalisation du système d'évacuation de la puissance résiduelle;

— sur la figure 3, une vue partielle d'une variante de réalisation du système d'évacuation de la puissance résiduelle représenté sur la figure 2,

— sur la figure 4, une vue partielle montrant un troisième mode de réalisation de l'invention, et

— sur la figure 5, une vue montrant la combinaison d'un système d'évacuation de la puissance résiduelle selon la figure 2 avec un échangeur bouteille de type connu.

Dans la description qui suit, on a considéré le cas de réacteurs nucléaires comportant une cuve interne cylindrique. Il va de soi que l'invention s'applique tout aussi bien à des réacteurs nucléaires intégrés refroidis par un métal liquide dans lesquels la cuve interne est dite à redan. Ce dernier type de réacteur est déjà bien connu (voir notamment le BIST n° 182 de juin 1973) et il n'est donc pas nécessaire de le décrire en détail. Pour la compréhension de l'invention, il suffit d'indiquer que dans un tel réacteur, la cuve interne comporte un redan qui est traversé de façon étanche par les échangeurs de chaleur intermédiaires. L'entrée des échangeurs intermédiaires est disposée au-dessus du redan et communique ainsi avec la sortie du coeur du réacteur. Au contraire, la sortie des échangeurs intermédiaires est disposée en-dessous du redan et communique donc avec l'aspiration des pompes primaires.

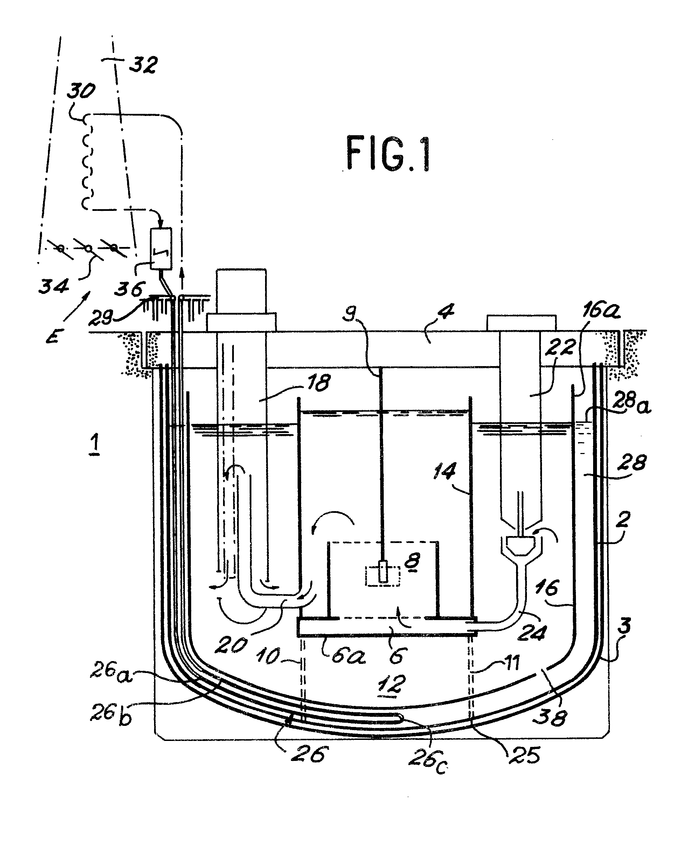

Si l'on se réfère à la figure 1, on voit que de façon connue, le réacteur comprend à l'intérieur d'un massif bétonné 1 une cuve principale 2 suspendue à une dalle de fermeture supérieure 4. Cette cuve principale 2 est doublée extérieurement par une cuve de sécurité 3 également suspendue à la dalle de fermeture 4. Dans la cuve principale 2, on trouve le sommier 6 sur lequel est positionné le coeur 8 du réacteur. D'une manière classique, on pilote le réacteur au moyen d'une pluralité de barres de commande 9 (une seule barre est représentée pour ne pas compliquer inutilement le dessin) dont on peut faire varier l'enfoncement dans le coeur 8. Le sommier 6 est supporté par un platelage 10 reposant sur le fond de la cuve 2 par le périmètre du cercle 25. Dans la zone 12, se trouve le dispositif récepteur du combustible fondu. Le coeur 8 est entouré par une cuve interne cylindrique 14. A l'intérieur de la cuve principale 2, on trouve une cuve 16 formant baffle qui double également le fond de la cuve 2, ce baffle étant libre à son extrémité supérieure 16a. Entre le baffle 16 et la cuve interne 14, on trouve une pluralité d'échangeurs intermédiaires tels que 18 suspendus à la dalle 4 et raccordés par des conduites 20 à l'intérieur de la cuve interne 14. On y trouve également des pompes primaires telles que 22 qui sont également suspendues à la dalle 4. La sortie de ces pompes est raccordée par des conduites 24 au sommier 6 pour réinjecter le sodium liquide froid. L'ensemble de ces dispositions correspond à un réacteur nucléaire intégré refroidi par un métal liquide de type connu.

Selon la présente invention, et selon un premier mode de mise en oeuvre, le système d'évacuation de la puissance résiduelle est constitué par une pluralité d'échangeurs de chaleur auxiliaires E. Chaque échangeur E comprend une pluralité de tubes 26 qui plongent dans l'espace intermédiaire 28 ménagé entre la cuve 2 et le baffle 16. Chacun de ces tubes 26 constitue un circuit fermé et comporte une branche aller 26a et une branche retour 26b raccordées par une partie courbe 26c. Celle-ci peut selon les tubes être située dans une région voisine de l'ace de la cuve principale 2 (comme représenté sur la figure) ou à une distance plus ou moins éloignée de cet axe. Les extrémités supérieures des tubes 26 traversent la dalle 4 et sont raccordées par l'intermédiaire d'un collecteur 29 à un échangeur E constitué par un faisceau d'échange 30 logé dans une cheminée 32 munie de volets 34 de réglage d'air. On fait circuler du sodium dans les tubes 26 au moyen d'une pompe électromagnétique 36.

Par ailleurs, il faut observer que le baffle 16 est muni dans son fond d'orifices tels que 38 qui font communiquer l'espace intermédiaire 28 avec le volume du collecteur froid situé entre le baffle 16 et la cuve interne 14. Ces orifices 38 sont calibrés de manière à diminuer les vitesses de variation de niveau libre 28a de l'espace intermédiaire 28. En outre, la zone 12 limitée par le platelage 10 n'est pas étanche comme cela se présentait dans les réacteurs antérieurs, mais elle communique avec le reste de la cuve grâce à des ouvertures 11 prévues dans le platelage 10.

Le fonctionnement de l'installation est le suivant:

En fonctionnement normal, les volets 34 sont fermés mais la pompe 36 fonctionne. Les tubes 26 enlèvent de la chaleur en haut de la cuve principale 2 et restituent cette chaleur en bas de la cuve, puisque les volets sont fermés. Ce circuit assure donc le refroidissement du haut de la cuve principale 2 et il n'est plus nécessaire de prévoir un débit important de fuite dans les pieds d'assemblaques du coeur pour assurer ce refroidissement, ce débit étant de l'ordre de 3% du débit des pompes primaires. Ce débit de fuite qui est en général utilisé également pour sa fonction de verrouillage hydraulique des pieds d'assemblages pourra être limité à une valeur de l'ordre de 0,5% du débit des pompes primaires.

Lorsqu'on veut assurer l'évacuation de puissance résiduelle, les volets 34 sont ouverts et les échangeurs E fonctionnent effectivement.

L'absorption de la puissance résiduelle se fait à travers le baffle 16. De plus, la cuve principale est mieux refroidie que dans les solutions antérieures (échangeursbouteille auxiliaires) et constitue en toutes circonstances la structure la plus froide du réacteur.

Un avantage essentiel procuré par l'invention réside dans le maintien à une température suffisamment basse des structures présentant des contraintes élevées et ayant une fonction de sûreté essentielle, telles que les régions de la cuve principale disposées le long du cercle 25; ces régions, qui correspondent à ce que l'on appelle le »point triple«, doivent assurer le supportage du coeur 8, tout en maintenant l'étanchéité de la cuve principale 2.

L'invention apporte un autre avantage dans le cas d'un accident pour lequel il ne s'est pas produit de chute des barres de commande assurant l'arrêt de la réaction de fission. Dès l'ouverture des volets 34, la cuve principale et le baffle deviennent nettement plus froids que la moyenne du sodium liquide et en particulier du sodium baignant les barres de commande 9. Il en résulte que la dilatation différentielle, correspondant à la différence entre la dilatation de la cuve principale 2 et celle des barres de commande 9, est nettement moindre que dans les solutions classiques où cette dilatation conduit à une extraction importante des barres hors du coeur. Dans la présente disposition, cette extraction est très réduite et il en résulte que la réaction neutronique en chaîne est annulée par la contre-réaction thermique pour une température du sodium, dite température »d'étouffement«, nettement plus faible, de l'ordre par exemple de 730° C au lieu de 900° C.

Un avantage supplémentaire réside dans la récupération du combustible fondu. Tout d'abord, du fait que le platelage 10 est ajouré, la plaque inférieure 6a du sommier est plus facilement refroidi par convection naturelle et celle-ci peut donc retenir davantage de débris avant d'être percée. Ensuite, si le combustible fondu tombe sur le fond du baffle 16, celui-ci est très bien refroidi par les tubes 26.

Enfin, pour chaque échangeur E, il y a un grand nombre de tubes d'échange 26. En cas de fuite d'un de ces tubes, il est donc facile de l'obturer sans diminuer sensiblement la surface d'échange.

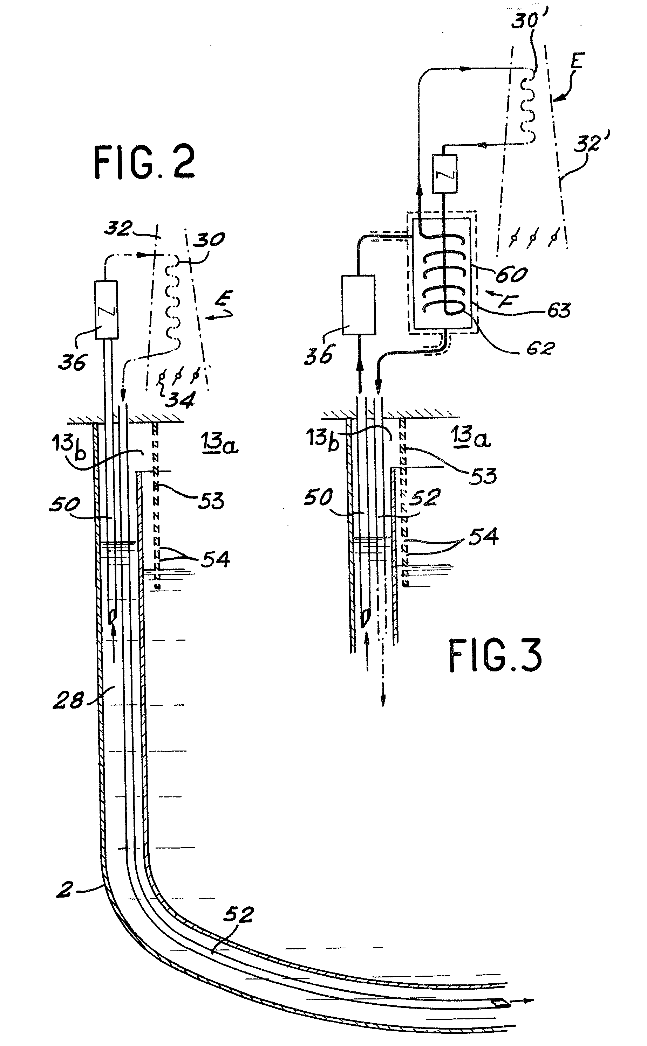

Sur la figure 2, on a représenté un deuxième mode de réalisation de l'invention.

Selon ce mode de réalisation, les échangeurs auxiliaires E sont associés non plus à une pluralité de tubes fermés, mais à une pluralité de paires de tubes ouverts, chaque paire comprenant un tube 50 de prélèvement de sodium dans la région supérieure de l'espace 28 et un tube 52 de refoulement du sodium qui débouche au bas de l'espace 28. Ces tubes 50 et 52 sont raccordés au faisceau d'échange associé à la cheminée 32 pour former un échangeur airsodium. Dans ce mode de réalisation, le baffle 16 ne comporte pas d'orifices. Le sodium contenu dans l'espace 28 est donc isolé du sodium primaire et peut tout au plus contenir quelques traces d'activité provenant d'une éventuelle condensation d'aérosols issus du sodium primaire. Pour minimiser celle-ci, on peut avantageusement prévoir un baffle supplémentaire 53 situé à proximité du baffle 16 et plongeant dans le sodium primaire, ce baffle 53 étant suspendu à la dalle 4. Le baffle 53 est muni d'orifices 54 pour égaliser les pressions du ciel d'argon dans les espaces 13a et 13b situés de part et d'autre du baffle 53.

Cette solution présente l'avantage d'être plus fiable et également plus économique que la solution selon le premier mode de réalisation puisqu'elle supprime les tubes fermés 26 avec leur courbure 26c et qu'en outre le sodium de l'espace 28 circulant directement dans le faisceau d'échange 30, la résistance thermique est considérablement diminuée, ce qui permet d'utiliser, à performances égales, une surface d'échange sodium-air plus faible. De plus, cette solution minimise l'inconvénient de la non démontabilité des tubes 52 car une fuite dans un tube 52 est infiniment peu probable et n'aurait de toutes manières qu'une conséquence très limitée.

Sur la figure 3, on a représenté une première variante de réalisation du système représenté sur la Fig. 2.

Selon cette variante, les tubes 50 et 52 débouchent dans l'enveloppe externe 60 d'un échangeur F, cette enveloppe 60 étant avantageusement constituée par une double paroi 63. Dans cette enceinte, on trouve un serpentin 62 monté dans un circuit de sodium comportant le faisceau d'échange 30' analogue au faisceau 30 des figures 1 et 2. On retrouve également la cheminée 32' analogue à la cheminée 32.

Grâce à la présence de l'échangeur F, on diminue considérablement les risques de fuites, car ces risques sont beaucoup plus faibles dans le cas de l'enceinte cylindrique 60 que dans celui du faisceau 30. De plus, l'existence de la double paroi 63 élimine pratiquement le risque de vidange du sodium à l'extérieur de l'enceinte 60.

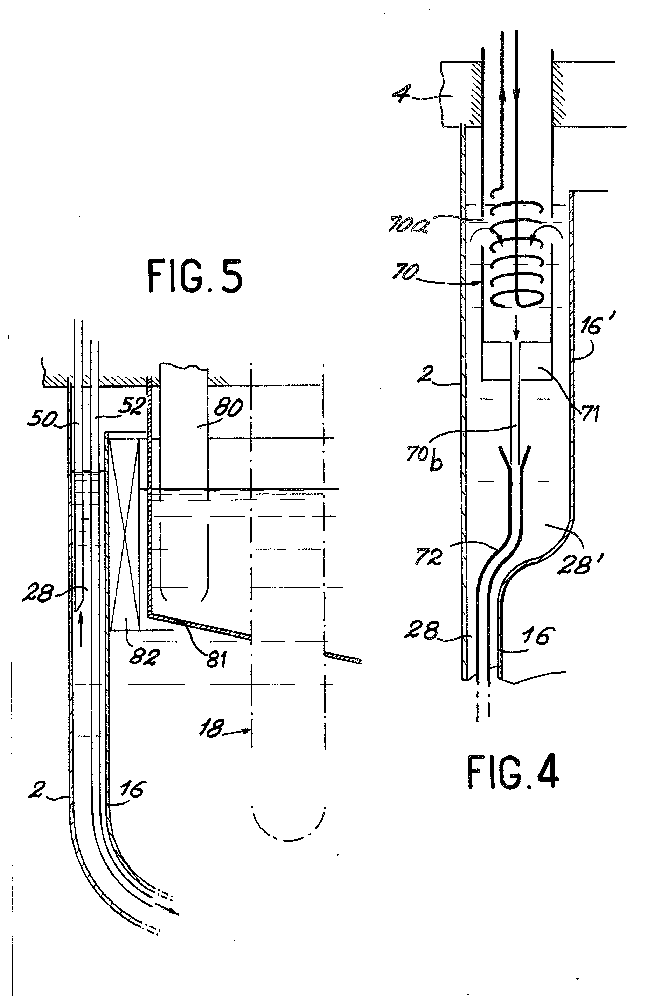

Sur la figure 4, on a représenté schématiquement une autre solution selon laquelle un échangeur du type bouteille 70 est logé dans l'espace 28 entre la cuve principale 2 et le baffle 16. Dans sa partie supérieure 16', le baffle présente un décrochement définissant un espace intermédiaire 28' agrandi où l'échangeur 70 est logé. Celui-ci, qui est suspendu à la dalle 4, présente des fenêtres d'entrée 70a et il est muni d'une pompe électromagnétique 71 dont la tubulure de refoulement 70b s'emboîte dans l'extrémité en forme d'entonnoir d'une tubulure de sortie 72 dont l'autre extrémité se prolonge jusqu'au bas de l'espace 28. L'ensemble constitué par l'échangeur 70 et la pompe 71 est ainsi rendu démontable.

Sur la figure 5, on a représenté la combinaison d'un échangeur auxiliaire tel que celui qui est représenté sur la figure 2, avec un échangeur bouteille 80 classique immergé dans le sodium primaire. Cette combinaison est particulièrement appropriée au cas d'un réacteur comportant une cuve interne munie d'un redan 81. Pour minimiser en fonctionnement normal les fuites thermiques à travers le baffle 16, on peut avantageusement prévoir à la partie supérieure de celui-ci un calorifuge 82 qui fait tout le tour du baffle 16.

Dans cette solution complète, en fonctionnement normal, le refroidissement de la cuve 2 se fait par la circulation du sodium dans l'espace intermédiaire 28, les volets 34 étant fermés. En situation accidentelle, les échangeurs bouteille 80 extraient l'essentiel de la puissance résiduelle, mais en raison de l'ouverture des volets 34, les échangeurs E maintiennent la température de la cuve principale à une valeur peu élevée.

**Revendications**

1. Réacteur nucléaire à neutrons rapides intégré refroidi par un métal liquide et comportant une cuve principale (2) fermée à sa partie supérieure par une dalle (4), une cuve interne (14) contenant le coeur (8), celui-ci reposant sur un sommier (6) de positionnement et d'alimentation du coeur en métal liquide, reposant lui-même sur une structure de supportage (10) s'appuyant sur le fond de la cuve principale dudit réacteur, un baffle interne (16) doublant la paroi latérale et au moins une partie du fond de ladite cuve principale et définissant avec celle-ci un espace intermédiaire (28) rempli par ledit métal liquide, caractérisé en ce que le baffle interne (16) double tout le fond de la cuve principale (2), le réacteur comprenant de plus des tubes (26a) pour amener un métal liquide dans ledit espace intermédiaire au-dessus du fond de la cuve principale et des tubes (26b) pour ramener ledit métal liquide vers un échangeur auxiliaire (E) afin d'évacuer les calories provenant dudit espace intermédiaire.

2. Réacteur nucléaire selon la revendication 1, caractérisé en ce que les tubes (26a) servant à amener le métal liquide dans l'espace intermédiaire sont raccordés audessus du fond de la cuve principale aux tubes (26b) servant à ramener le métal liquide vers l'échangeur auxiliaire (E), ce dernier étant disposé à l'extérieur du réacteur à un niveau supérieur à celui de la dalle (4) et muni de moyens (34) pour régler l'efficacité de l'échange thermique, ledit baffle (16) comportant des orifices (38) mettant en communication ledit espace intermédiaire (28) avec le métal liquide contenu dans la cuve principale (2).

3. Réacteur nucléaire selon la revendication 1, caractérisé en ce que le baffle interne (16) isole le métal liquide contenu dans l'espace intermédiaire du métal liquide de refroidissement du coeur du réacteur, les tubes (50) pour ramener le métal liquide contenu dans l'espace intermédiaire vers l'échangeur auxiliaire (E) plongeant dans l'espace intermédiaire et débouchant au voisinage de sa partie supérieure, les tubes (52) pour amener le métal liquide dans l'espace intermédiaire plongeant dans ce dernier et débouchant au dessus du fond de la cuve principale, l'échangeur auxiliaire étant raccordé auxdits tubes et disposé à l'extérieur du réacteur à un niveau supérieur à celui de ladite dalle (4), ledit échangeur étant muni de moyens (34) pour régler l'efficacité de l'échange thermique.

4. Réacteur selon la revendication 3, caractérisé en ce que lesdits tubes (50, 52) débouchent dans un échangeur intermédiaire (F) parcouru par un fluide secondaire qui circule dans ledit échangeur auxiliaire (E).

5. Réacteur selon la revendication 1, caractérisé en ce que l'échangeur auxiliaire (E) est suspendu à la dalle (4) et plonge dans ledit espace intermédiaire (28), ledit échangeur auxiliaire comportant une enveloppe (70) munie de fenêtres d'entrée (70a) disposées à la partie supérieure dudit espace intermédiaire et une pompe (71) dont la tubulure de refoulement (70b) s'emboîte dans l'extrémité en forme d'entonnoir de chacun des tubes (72) amenant le métal liquide dans l'espace intermédiaire, l'extrémité ouverte de ces tubes débouchant dans la région inférieure dudit espace intermédiaire.

6. Réacteur selon l'une quelconque des revendications 2 à 5, caractérisé en ce que ladite structure de supportage (10) du sommier (6) est munie d'orifices (11) et repose sur le fond de la cuve principale (2).

**Patentansprüche**

1. Flüssigmetallgekühlter, schneller Kernreaktor in integrierter Bauweise, umfassend einen in seinem oberen Bereich durch eine Platte (4) geschlossenen Hauptbehälter (2), einen den Kern (8) enthaltenden, inneren Behälter (14), der auf einem Träger (6) zur Positionierung und Versorgung des Kernes mit flüssigem Metall ruht, wobei der Träger (6) selbst auf einer Stützkonstruktion (10) ruht, die sich am Boden des Hauptbehälters des Reaktors abstützt, und ein inneres Baffle (16), welches die Seitenwand und wenigstens einen Teil des Bodens des Hauptbehälters verdoppelt und mit diesem einen Zwischenraum (28) begrenzt, der von dem flüssigen Metall gefüllt ist, dadurch gekennzeichnet, daß das innere Baffle (16) den gesamten Boden des Hauptbehälters (2) verdoppelt, daß der Reaktor ferner Rohre (26a), um ein flüssiges Metall in den Zwischenraum oberhalb des Bodens des Hauptbehälters zu führen, und Rohre (26b) umfaßt, um dieses flüssige Metall zu einem zusätzlichen Wärmetauscher (E) zu bringen, damit die von dem Zwischenraum herstammenden Wärmemengen abgeführt werden.

2. Kernreaktor nach Anspruch 2, dadurch gekennzeichnet, daß die dem Heranführen von flüssigem Metall in den Zwischenraum dienenden Rohre (26a) oberhalb des Bodens des Hauptbehälters mit den Rohren (26b) verbunden sind, die zum Zurückführen des flüssigen Metalls zu dem zusätzlichen Wärmetauscher (E) dienen, wobei letzterer außerhalb des Reaktors auf einer höheren Höhe als diejenige der Platte (4) angeordnet und mit Mitteln (34) versehen ist, um den Wirkungsgrad des Wärmeaustausches zu regeln, und daß das Baffle (16) Öffnungen (38) aufweist, die eine Verbindung des Zwischenraumes (28) mit dem in dem Hauptbehälter (2) enthaltenen, flüssigen Metall herstellen.

3. Kernreaktor nach Anspruch 1, dadurch gekennzeichnet, daß das innere Baffle (16) das in dem Zwischenraum enthaltene, flüssige Metall von dem flüssigen Metall zum Kühlen des Reaktorkernes isoliert, daß die Rohre (50) zum Abführen des in dem Zwischenraum enthaltenen, flüssigen Metalls zu dem zusätzlichen Wärmetauscher (E) in den Zwischenraum eintauchen und in der Nähe seines oberen Bereiches münden, daß die Rohre (52) zum Herbeiführen des flüssigen Metalls in den Zwischenraum im letzteren eintauchen und oberhalb des Bodens des Hauptbehälters münden, daß der zusätzliche Wärmetauscher mit den genannten Rohren verbunden und außerhalb des Reaktors auf einer höheren Höhe als derjenige der Platte (4) angeordnet ist und daß dieser Wärmetauscher mit Mitteln (34) zur Regelung des Wirkungsgrades des Wärmeaustauschers ausgerüstet ist.

4. Kernreaktor nach Anspruch 3, dadurch gekennzeichnet, daß die Rohre (50, 52) in einen Zwischenwärmetauscher (F) münden, der von einem Sekundärfluid durchströmt wird, welches in dem zusätzlichen Wärmetauscher (E) strömt.

5. Kernreaktor nach Anspruch 1, dadurch gekennzeichnet, daß der zusätzliche Wärmetauscher (E) an der Platte (4) aufgehängt ist und in den Zwischenraum (28) taucht, daß der zusätzliche Wärmetauscher eine Umhüllung (70), die mit in dem oberen Bereich des Zwischenraumes angeordneten Eintrittsfenstern (70a) ausgebildet ist, und eine Pumpe (71) umfaßt, deren Förderstutzen (70b) in das trichterförmige Ende eines jeden das flüssige Metall in den Zwischenraum heranführenden Rohres (72) eingeführt ist, und daß das offene Ende dieser Rohre in den unteren Bereich des Zwischenraumes mündet.

6. Kernreaktor nach irgendeinem der Ansprüche 2 bis 5, dadurch gekennzeichnet, daß die Stützkonstruktion (10) des Trägers (6) mit Öffnungen (11) versehen ist und auf dem Boden des Hauptbehälters (2) ruht.

## Claims

1. Liquid metal-cooled fast neutron integrated nuclear reactor comprising a main vessel (2) closed at the top by a confinement slab (4), an internal vessel (14) containing the core (8), which rests on a bearer (6) for positioning the core and feeding it with liquid metal, and which itself rests on a support structure (10) borne on the bottom of the main vessel of said reactor, an internal baffle (16) doubling the side wall and at least a part of the bottom of said main vessel, and defining therewith an intermediate space (28) filled by said liquid metal, characterized in that the internal baffle (16) doubles the entire bottom of the main vessel (2), the reaction additionally comprising tubes (26a) for conducting a liquid metal into said intermediate space above the bottom of the main vessel, and tubes (26b) for leading away said liquid metal towards an auxiliary exchanger (E) whereby to remove heat from said intermediate space.

2. Nuclear reactor according to Claim 1 characterized in that the tubes (26a) for conducting the liquid metal into the intermediate space are connected above the bottom of the main vessel to the tubes (26b) for leading away the liquid metal towards the auxiliary exchanger (E), said latter being disposed externally of the reactor and at a level above that of the slab (4) and being provided with means (34) for controlling the efficiency of heat exchange, said baffle (16) having orifices (38) providing communication between said intermediate space (28) and the liquid metal contained in the main vessel (2).

3. Nuclear reactor according to Claim 1 characterized in that the internal baffle (16) isolates the liquid metal contained in the intermediate space from the liquid metal coolant for the reactor core, the tubes (50) for leading away the liquid metal contained in the intermediate space towards the auxiliary exchanger (E) dipping into the intermediate space and opening near its upper part, the tubes (52) for conducting the liquid metal into the intermediate space dipping into the latter and opening above the bottom of the main vessel, the auxiliary exchanger being connected to said tubes and disposed externally of the reactor and at a level above that of said slab (4), said exchanger having means (34) for controlling the efficiency of heat exchange.

4. Reactor according to Claim 3 characterized in that said tubes (50, 52) open into an intermediate exchanger (F) traversed by a secondary fluid which circulates in said auxiliary exchanger (E).

5. Reactor according to Claim 1 characterized in that the auxiliary exchanger (E) is suspended from the slab (4) and dips into the intermediate space (28), said auxiliary exchanger comprising a shell (70) having inlet ports (70a) disposed in the upper part of said intermediate space, and a pump (71) whose outflow tube (70b) is enwrapped in the funnel-shaped end of each of the tubes (72) conducting the liquid metal into the intermediate space, the open end of said tubes opening into the lower part of said intermediate space.

6. Reaktor according to any one of Claims 2 to 5 characterized in that said support structure (10) for the bearer (6) is provided with orifices (11) and rests on the bottom of the main vessel (2).

# FIG.1

# FIG. 2

# FIG.3

FIG.5

FIG.4